# EUROPEAN PATENT APPLICATION

(11) **EP 2 128 585 A1**
(43) Date of publication of application: **02.12.2009**
(21) Application number: 08251836.6
(22) Date of filing: 27.05.2008
(51) Int. Cl.: G01M 5/00

(54) **Providing an indication of a conditon of a structure**

(71) Applicant: BAE Systems plc, London SW1Y 5AD (GB); EADS Deutschland GmbH, 85521 Ottobrunn (DE)
(72) Inventor: The designation of the inventor has not yet been filed
(74) Representative: BAE SYSTEMS plc Group IP Department

(57) **Abstract**

A device adapted to provide an indication of a condition of a structure (202) includes a circuit (L, R, C, C₀) configured to be electrically resonant at a predetermined frequency in a normal state. The circuit at least partially comprises components formed using Direct Write. In use, the circuit is connected to or formed on a part of the structure such that a change in a property of the part of the structure causes the circuit to be electrically resonant at a frequency different to the predetermined frequency, thereby providing an indication of a condition of the structure.

## Description

The present invention relates to providing an indication of a condition of a structure.

It is important to detect changes in structures for safety and maintenance reasons. Damage can be caused by various factors such as humidity, corrosion and hydroxylation, fatigue and/or fracture. A common technique for detecting such changes is to physically fix one or more sensors, e.g. by means of bonding or screwing, to a surface of the structure. Such sensors can transmit information to other devices and tend to involve expensive and complex hardware. They may also require permanent modification of the structure, e.g. creating apertures for screws.

Embodiments of the present invention are intended to provide devices for giving an indication of a condition of a structure that are cost-effective and easy to manufacture.

According to one aspect of the present invention there is provided a device adapted to provide an indication of a condition of a structure, the device including a circuit configured to be electrically resonant at a predetermined frequency in a normal state, the circuit at least partially comprising components formed using Direct Write, in use, the circuit being connected to a part of a structure such that a change in a property of the part of the structure causes the circuit to be electrically resonant at a frequency different to the predetermined frequency, thereby providing an indication of a condition of the structure.

The circuit components can include:
a first capacitor device arranged in parallel with an inductor device;
a second capacitor device arranged in parallel with the first capacitor device, and
a resistor device arranged in series with the second capacitor device.

The circuit can Include a capacitor device formed using Direct Write on a surface of the structure or on a coating applied to the surface. The capacitor device may include a comb capacitor. The circuit can include an inductor device formed using Direct Write on a surface of the structure or on a coating applied to the surface. The circuit may include a capacitor device formed of piezoelectric material.

The property of the structure may include a change due to humidity and/or corrosion and/or hydroxylation and/or fatigue and/or fracture.

The predetermined frequency in some embodiments is 13,56 MHz, but the predetermined frequency can be within a range of 100 kHz to 1 GHz The device may further include an arrangement configured to provide an identifier for the device. The identifier arrangement may include an RAID arrangement.

The structure may include a body of a vehicle, such as an aircraft.

According to a further aspect of the present invention there is provided a method of obtaining an indication of a condition of a structure, the method including causing the device to indicate its resonant frequency and comparing a resulting resonant frequency with the predetermined resonant frequency.

According to another aspect of the present invention there is provided a kit including at least one device substantially as described herein and a scanner device for detecting a resonant frequency of the at least one device.

According to yet another aspect of the present invention there is provided a structure, such as a vehicle, fitted with at least one device substantially as described herein.

According to a further aspect of the present invention there is provided a device adapted to provide an indication of a condition of a structure, the device including a circuit configured to be electrically resonant at a predetermined frequency in a normal state, the circuit including a capacitor formed of piezoelectric material, where, in use, presence of moisture causes the circuit to be electrically resonant at a frequency different to the predetermined frequency, thereby providing an indication of a condition of the structure.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawings in which:
Figure 1 is a schematic diagram of a circuit used in an embodiment of the device;
Figure 2 is a schematic plan view of an embodiment of the device formed on part of a structure;
Figures 3 is a schematic cross-sectional diagram through line A - A' of Figure 2. and
Figure 4 is a schematic cross-sectional diagram of an alternative embodiment of the device.

Embodiments of the present invention include a device that is connected directly or indirectly to a structure whose condition is to be monitored. The device may be connected to the structure either during or following formation of the device/structure, e.g. part of the device may be formed on the structure, or the device may be formed on a substrate which is subsequently connected to the structure. It will be appreciated that the device can be used in connection with a wide variety of structures, from large constructions, such as buildings or vehicles, e.g. aircraft, to smaller items such as pieces of electronic equipment The structure may be formed of various kinds of materials, including ones that can be damaged by factors such as humidity, corrosion, fatigue and/or fracture. Several of the devices can be used and positioned on different parts of a structure to give indications of the condition of the structure at several points over its surface. The device includes a circuit that is designed to be electrically resonant at a particular frequency. Changes in at least one property of the part of the structure to which the device is connected can lead to the resonant frequency of the circuit changing. During a condition checking/monitoring procedure a device capable of detecting the resonant frequency of this type of circuit is used to scan the structure and indicate if the resonant frequency of any scanned circuit differs from the expected resonant frequency. One example of a suitable scanning device is the "TAGtester A", sold by TAGnology RFID GmbH of Voltsbert, Austria.

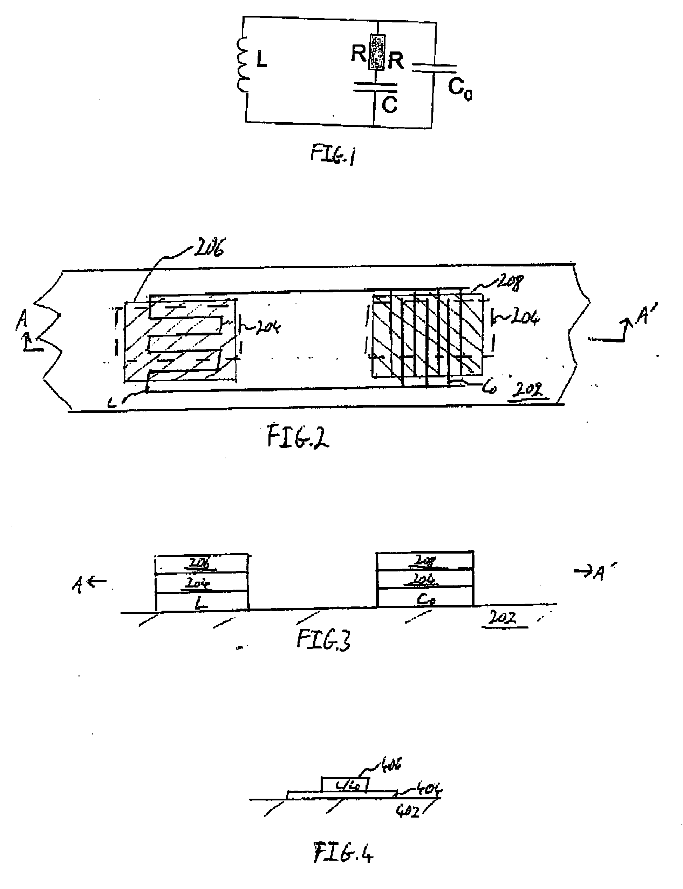

An example of a circuit that can be used in embodiments of the device is illustrated in Figure 1. The circuit includes an inductor device L that is arranged in parallel with a first capacitor device C₀. A second capacitor device C is arranged in parallel with the first capacitor device C₀ and a resistor device R is arranged in series with the second capacitor device C. The components of the circuit are arranged such that either the inductor L or the first capacitor C₀ will be affected by physical changes in the structure. It will be appreciated that a change in the value of R or C will cause a shift in the resonant frequency of the circuit. Having the circuit based around capacitative elements means that they directly affect the resonant frequency of the circuit, making a change easily detectable by checking the resonant frequency using the scanning device. The skilled person will appreciate that variations from the illustrated are circuit are possible which can still provide a similar functionality.

The predetermined resonant frequency in one embodiment is 13.56 MHz, but in principle the system can use frequencies within a range of 100 kHz to 1 GHz. The reader device can be configured to induce/detect a resonant frequency within a predefined range.

An example of how the circuit can be arranged in a device is shown schematically in Figures 2 and 3. A part of a structure 202 has at least one component of the circuit formed upon it by means of Direct Write. The term Direct Write is commonly used to describe a range of known technologies that allow the fabrication of two or three-dimensional functional structures using processes that are compatible with being carried out directly onto potentially large complex shapes. Direct Write manufacturing techniques include: Ink jet, Micro-spfay, Quilt, Pen, Aerosol, Pulsed laser evaporation, and Laser direct etching. Direct Write has the ability to fabricate active and passive functional devices directly onto structural parts and assemblies. The benefits of utilising these techniques are increased functionality, reduced size and weight, reduced cost, design simplification, reduction in component number and a reduction in time to market.

Additive manufacturing is a generic term used to describe a process by which successive layers of a structure, device or mechanism are formed, and in which in each layer components such as electrical circuit components may be formed by a Direct Write method. The term "additive" is used to contrast conventional manufacturing processes such as lithography, milling, turning, etc., in which material form a solid layer or object is taken away or removed.

In general, in Direct Write and additive manufacturing processes, writing or printing materials are referred to as inks, although the actual form of the material may comprise a wide range of powders, suspensions, plasters, colloids, solutes, vapours etc., which may be capable of fluid flow and which may be applied in pastes, gels, sprays, aerosols, liquid droplets, liquid flows, etc. Once applied, the material may be fixed by curing, consolidating, sintering or allowing to dry, frequently involving application of heat to change the state of the material to a solid phase.

The object or structure (which may be a very large three-dimensional object) on which the deposition is performed is referred to in the art by the term "substrate", and this is the sense of the term as used in the present specification. The deposited ink, once fixed on the substrate, forms a component or part of a structure that is to be manufactured.

With almost all deposition methods used for Direct Write, after deposition the inks have to be cured, consolidated or sintered. There are inks for which this can be done with optical radiation but for most high performance inks this is done thermally by placing the substrate in an oven. Inductive heating means may also be used for curing in some cases.

Returning to Figures 2 and 3, the at least one component of the circuit formed on the substrate/structure surface 202 using Direct Write can comprise the inductor device L. An insulating layer 204 (shown transparent and in broken line in Figure 2 for clarity) may be formed between the inductor and a ferromagnetic top coat 206 (shown transparent/hatched in Figure 2 for clarity). In use, the inductor can induce a current in the substrate, the current being affected by the condition of the substrate material directly beneath the inductor. Such a current can therefore affect the resonant frequency of the circuit. The inductor can have a comb or inter-digitsl form so that it is particularly susceptible to changes in the physical surface upon which it is formed.

Additionally or alternatively, the capacitor C₀ can be formed using Direct Write on the surface 202. An insulating layer 204 may be formed between the capacitor C₀ and an electrically conductive top coat 208 (shown transparent/hatched in Figure 2 for clarity), Again, the capacitor may be of a comb or inter-digitai form. In use, cracks or other changes in the dimensions of the surface upon which the capacitor can affect the resonant frequently of the circuit. The influence of the parallel capacitor C deceases or increases with increases or decreases, respectively, of the resistor R, resulting in a shift in resonant frequency. Using capacitative elements results in direct change of the resonant frequency and this is easy to measure using a hand-held scanning device. Corrosion of the ferromagnetic top coat results in a reduction in the inductance of the inductor coil, as well as in the capacitance if the conductive topcoat corrodes. Both will measurably increase the resonant frequency of the Circuit. Humidity can increase capacitance and due to the lower mobility of ions in this case, humidity can be detected if circuits with resonant frequencies, e.g. 125 kHz and 13.5 MHz are used.

An advantage of using the Direct Write technique is that the components of the circuit can be very wide ranging in their design. Further, use of Direct Write allows intimate contact with the structure, thereby providing an accurate indication of its condition.

Turning to Figure 4, an alternative embodiment is shown. In this embodiment a coating, e.g. paint, primer or lacquer, 404 is applied to the structure 402. At least one component 406 of the circuit is formed, preferably using Direct Write, on top of the coating 404. Again, the component formed using Direct Write can include at least the inductor and/or the capacitor device and/or further components of the circuit. Changes in the coating can therefore affect the resonant frequency of the circuit. This arrangement can be used to detect ageing of/changes in properties of the coating before the underlying substrate.

In yet another embodiment the capacitor device is formed of piezoelectric material having a predetermined resonant frequency. Aggregation of water vapour or ice particles can dampen the resonating element and couples a change in the resonant frequency. Having the capacitor formed, preferably using Direct Write, on the coating 304, means that moisture, water or ice present will change the dielectric material between the digits of the inter-digital capacitor, thereby causing a change in resonant frequency.

The device/circuit can include an arrangement, e.g, an RFID arrangement, intended to provide an identifier associated with the device to a scanning/reading device. This can make it convenient to identify which device on the structure is being scanned. A suitable reader device (which may also be capable of giving an indication of the resonant frequency of the circuit) emits a low-power radio wave field that induces a current In the circuit, thereby powering it up to transfer an identifier. Typically, the device will include a passive RFID arrangement that requires no internal power supply, but alternative are possible.

Alternatively, a set of devices may be provided, each device in the set being configured to resonate at a different predetermined frequency to the other devices. In this arrangement a record can be kept of where each of the devices was located on the structure, along with a record of its predefined resonant frequency, to allow a device to be identified without the need for an RFID arrangement or the like.

The embodiments described above are relatively cheap to manufacture and can be small in dimension, which makes it feasible to placed several of them at different locations over the surface of a structure, thereby providing an economical and un-intrusive set of sensors that accurately provide indications of the condition of the structure.

## Claims

1. A device adapted to provide an indication of a condition of a structure (242), the device including a circuit (L, R, C, C₀) configured to be electrically resonant at a predetermined frequency in a normal state, the circuit at least partially comprising components formed using Direct Write, in use, the circuit being connected to a part of a structure such that a change in a property of the part of the structure causes the circuit to be electrically resonant at a frequency different to the predetermined frequency, thereby providing an indication of a condition of the structure.

2. A device according to claim 1, wherein the circuit includes:
a first capacitor device (C₀) arranged in parallel with an inductor device (L):
a second capacitor device (C) arranged in parallel with the first capacitor device, and
a resistor device (R) arranged in series with the second capacitor device.

3. A device according to claim 2, wherein the first capacitor device (C₀) is formed using Direct Write on a surface of the structure (202).

4. A device according to claim 2, wherein the first capacitor device (C₀) is formed using Direct Write on a coating (404) applied to a surface of the structure (402).

5. A device according to any one of claims 2 to 4, wherein the first capacitor device (C₀) includes an interdigital or comb-type capacitor.

6. A device according to any one of claims 2 to 5, wherein the inductor device (L) is formed using Direct Write on a surface of the structure (202).

7. A device according to any one of claims 2 to 5, wherein the inductor device (L) is formed using Direct Write on a coating (404) applied to a surface of the structure (402).

8. A device according to any one of the preceding claims, wherein the circuit Includes a capacitor device (C₀) formed of piezoelectric material that determines the predetermined resonant frequency.

9. A device according to any one of the preceding claims, wherein the property of the structure Includes a change due to humidity and/or corrosion and/or hydroxylation and/or fatigue and/or fracture.

10. A device according to any one of the preceding claims, further including an arrangement configured to provide an identifier for the device.

11. A device according to claim 10, wherein the identifier arrangement includes an RFID arrangement.

12. A device according to any one of the preceding claims, wherein the structure includes a body of a vehicle, such as an aircraft.

13. A method of obtaining an indication of a condition of a structure (202), the method including causing a device according to any one of the preceding claims to indicate its resonant frequency and comparing the resulting resonant frequency with the predetermined resonant frequency.

14. A kit including at least one device according to any one of claims 1 to 12 and a scanner device for detecting a resonant frequency of the at least one device.

15. A structure, such as a vehicle, fitted with at least one device according to any one of claims 1 to 12.
